# EUROPÄISCHE PATENTANMELDUNG

(11) **EP 4 549 596 A1**
(43) Veröffentlichungstag der Anmeldung: **07.05.2025**
(21) Anmeldenummer: 23207651.3
(22) Anmeldetag: 03.11.2023
(51) Int. Cl.: C21B 5/06, C01B 3/34, C01B 3/38, C21B 7/00, C21B 13/00, C22B 9/05

(54) **REDUKTION METALLOXIDHALTIGEN MATERIALS AUF BASIS VON AMMONIAK NH3 UND KOHLENSTOFFHALTIGEM GAS**

(71) Anmelder: Primetals Technologies Austria GmbH, 4031 Linz (AT)
(72) Erfinder: Eglauer, Christoph, 4020 Linz (AT); Millner, Robert, 3382 Loosdorf (AT)
(74) Vertreter: Metals@Linz

(57) **Zusammenfassung**

Verfahren zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird. Dabei wird bei der Gewinnung des Reduktionsgases ein erster Gasstrom, der ammoniakhaltig ist, Ammoniakspaltung ausgesetzt, wobei ein Spaltungsgasstrom entsteht. Ein zweiter Gasstrom, der kohlenstoffhaltig ist, wird Reformierung ausgesetzt, wobei ein Reformierungsgasstrom entsteht. Es erfolgt Vereinigung zumindest einer Teilmenge des Spaltungsgasstroms und zumindest einer Teilmenge des Reformierungsgasstroms. Der Ammoniakspaltung wird Wärme zugeführt, die bei der Reformierung anfällt.

Vorrichtung zur Reduktion (10) von metalloxidhaltigem Material, umfassend: ein Reduktionsaggregat (30), eine in das Reduktionsaggregat (30) mündende Reduktionsgaseinleitung (40), eine erste Gasstromleitung (50) für ammoniakhaltiges Gas, eine zweite Gasstromleitung (70) für kohlenstoffhaltiges Gas, eine Vorrichtung zur Ammoniakspaltung (60), eine Reformierungsvorrichtung (80), eine Spaltungsgasstromleitung (61), eine Reformierungsgasstromleitung (81), eine Vereinigungsgasstromleitung (90). Die erste Gasstromleitung (50) mündet in die Vorrichtung zur Ammoniakspaltung (60), und die zweite Gasstromleitung (70) mündet in die Reformierungsvorrichtung (80), und die Spaltungsgasstromleitung (61) geht von der Vorrichtung zur Ammoniakspaltung (60) aus, und die Reformierungsgasstromleitung (81) geht von der Reformierungsvorrichtung (80) aus, und die Spaltungsgasstromleitung (61) sowie die Reformierungsgasstromleitung (81) münden in die Vereinigungsgasstromleitung (90). Es ist eine Wärmezufuhrvorrichtung (100) zur Wärmezufuhr von bei Reformierung in der Reformierungsvorrichtung (80) anfallender Wärme zur Vorrichtung zur Ammoniakspaltung (60) vorhanden.

## Beschreibung

### Gebiet der Technik

Die Anmeldung betrifft Verfahren und Vorrichtung zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird.

### Stand der Technik

Es ist bekannt, metalloxidhaltiges, beispielsweise eisenoxidhaltiges, Material - wie beispielsweise Erze - mittels reduzierenden Gases zu reduzieren. So etwa mittels Direktreduktion mit Reduktionsgas in einem Reduktionsaggregat, wie beispielsweise einem Reduktionsschacht; auch im Hochofenverfahren wirkt beispielsweise Kohlenmonoxid CO als reduzierendes Gas im Reduktionsaggregat Hochofen. Bei derzeit großindustriell angewendeten, herkömmlichen Verfahren basiert das reduzierende Gas überwiegend auf kohlenstoffhaltigen Gasen, beispielsweise Erdgas oder Koksofengas. Daher fallen dabei große Mengen Kohlendioxid CO₂ an, was unter anderem aus umweltpolitischen Gründen unerwünscht ist.

Zur Verminderung des CO₂-Ausstoßes bei der Reduktion von metalloxidhaltigem Material ist es bekannt, Wasserstoff H₂ als reduzierendes Gas zu verwenden. Dabei kann Wasserstoff als einziges Reduktionsgas verwendet werden, oder in Kombination mit anderen Gasen, beispielsweise erdgasbasierten Reduktionsgasen. Je größer der Anteil von CO₂ neutralem Wasserstoff H₂ im Reduktionsgas ist, desto weniger CO₂ wird emittiert.

Speicherung von Wasserstoff H₂ und Transport vom Ort seiner Erzeugung zu Verbrauchern ist jedoch aufgrund seiner physikalischen Eigenschaften problematisch und mit großem Aufwand verbunden.

Zur Verminderung des CO₂-Ausstoßes bei der Reduktion von metalloxidhaltigem Material ist es auch bekannt, Ammoniak NH₃ als Reduktionsmittel einzusetzen. Ammoniak bietet bezüglich Speicherung und Transport deutliche Vorteile gegenüber Wasserstoff H₂.

Ammoniak kann in Stickstoff und Wasserstoff gespalten werden

2 NH₃ → N₂ + 3 H₂

Wasserstoff H₂ kann als Reduktionsmittel mit den Metalloxiden, beispielsweise Eisenoxiden, reagieren:

3 Fe₂O₃ + H₂ → 2 Fe₃O₄ + H₂O

Fe₃O₄ + H₂ → 3 FeO + H₂O

FeO + H₂ → Fe + H₂O

Ammoniak kann aber auch selbst als Reduktionsmittel wirken:

9 Fe₂O₃ + 2 NH₃ → 6 Fe₃O₄ + N₂ + 3 H₂O

3 Fe₃O₄ + 2 NH₃ → 9 FeO + N₂ + 3 H₂O

3 FeO + 2 NH₃ → 3 Fe + N₂ + 3 H₂O

Grundsätzlich kann also unter Nutzung von Ammoniak NH₃ gewonnenes Reduktionsgas zur Reduktion von metalloxidhaltigem Material eingesetzt werden; so ein Reduktionsgas kann beispielsweise Ammoniak NH₃ sein, oder eine Mischung von Ammoniak NH₃ mit einem oder mehreren anderen Gasen - wobei bevorzugt eines oder mehrere auf metalloxidhaltiges Material reduzierend wirken können -, was beispielsweise bei einer Mischung von Ammoniak und seinen Spaltungsprodukten Wasserstoff H₂ und Stickstoff N₂ der Fall wäre, wobei natürlich auch noch andere Gase in der Mischung enthalten sein könnten. Es kann sich bei unter Nutzung von Ammoniak NH₃ erhaltenem Reduktionsgas aber auch um ein Reduktionsgas handeln, das keinen Ammoniak NH₃ enthält, aber das aus einer Spaltung erhaltene Spaltungsprodukt Wasserstoff H₂ - allein oder gemeinsam mit dem Spaltungsprodukt Stickstoff N₂ - enthält, gegebenenfalls in Mischung mit einem oder mehreren anderen Gasen - wobei bevorzugt eines oder mehrere auf metalloxidhaltiges Material reduzierend wirken können.

Solche Reduktionsreaktionen zur Erzeugung von metallischem Eisen Fe mit Wasserstoff H₂ und mit Ammoniak NH₃, und auch die Spaltung von Ammoniak in Stickstoff N₂ und Wasserstoff H₂ sind endotherm. Daraus ergeben sich Probleme bezüglich Aufrechterhaltung für die industrielle Durchführung der Reduktion notwendiger thermodynamischer und kinetischer Bedingungen.

Ein Ausgleich zwischen dem Bestreben, den CO₂-Ausstoß durch vermehrten Einsatz von Ammoniak NH₃ zu vermindern, und den mit Ammoniaknutzung verbundenen Problemen lässt sich durch gemeinsame Nutzung von Ammoniak und von kohlenstoffhaltigem Gas erzielen.

### Zusammenfassung der Erfindung

### Technische Aufgabe

Es ist die Aufgabe der vorliegenden Erfindung, eine Möglichkeit zur gemeinsamen Nutzung von Ammoniak und von kohlenstoffhaltigem Gas bei der Reduktion metalloxidhaltigen Materials vorzustellen.

### Technische Lösung

Die Aufgabe wird gelöst durch ein
Verfahren zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird,
wobei
bei der Gewinnung des Reduktionsgases
ein erster Gasstrom, der ammoniakhaltig ist, Ammoniakspaltung ausgesetzt wird und dabei ein Spaltungsgasstrom entsteht,
   und
ein zweiter Gasstrom, der kohlenstoffhaltig ist, Reformierung ausgesetzt wird und dabei ein Reformierungsgasstrom entsteht,
und Vereinigung zumindest einer Teilmenge des Spaltungsgasstroms und zumindest einer Teilmenge des Reformierungsgasstroms erfolgt,
dadurch gekennzeichnet, dass
der Ammoniakspaltung Wärme zugeführt, die bei der Reformierung anfällt.

Bei dem metalloxidhaltigen Material handelt es sich bevorzugt um eisenoxidhaltiges Material.

Das Verfahren zur Reduktion ist beispielsweise ein Verfahren zur Direktreduktion.

Das Reduktionsgas wird unter Nutzung von Ammoniak NH₃ erhalten, Ammoniak steuert einen Beitrag zum Reduktionsgas bei.

Das Reduktionsgas ist beispielsweise eine Mischung von Ammoniak NH₃ mit einem oder mehreren anderen Gasen. Es kann sich bei unter Nutzung von Ammoniak NH₃ erhaltenem Reduktionsgas aber auch um ein Reduktionsgas handeln, das keinen Ammoniak NH₃ enthält, aber das aus einer Ammoniakspaltung erhaltene Spaltungsprodukt Wasserstoff H₂ - allein oder gemeinsam mit dem Spaltungsprodukt Stickstoff N₂ - enthält, in Mischung mit einem oder mehreren anderen Gasen. Der erste Gasstrom kann reiner Ammoniak sein oder er kann eine ammoniakhaltige Gasmischung sein.

Das Reduktionsgas kann also Ammoniak umfassen; es besteht dabei teilweise aus Ammoniak und zusätzlich aus anderen Komponenten.

Als weitere Komponenten des Reduktionsgases sind auf das metalloxidhaltige Material reduzierend wirkende Komponenten bevorzugt; es kann sich bei solchen Komponenten beispielsweise um kohlenwasserstoffhaltige Gase, kohlenstoffhaltige Gase, wasserstoffhaltige Gase, Wasserstoff handeln.

Erfindungsgemäß wird Reduktionsgas unter Nutzung von Ammoniak erhalten, indem Ammoniak gespalten wird, und der dabei entstehende Spaltungsgasstrom umfassend Stickstoff und Wasserstoff und gegebenenfalls Ammoniak -, gegebenenfalls nach einer Anreicherung von Wasserstoff oder Abreicherung von Stickstoff - zum Reduktionsgas beisteuert.

Ammoniak steuert einen Beitrag zum Reduktionsgas bei, dieser Beitrag liegt neben dem von dem kohlenstoffhaltigen Gas beigesteuerten Beitrag zum Reduktionsgas vor. Ammoniak liefert - neben den infolge der Nutzung von kohlenstoffhaltigem Gas beigesteuerten Komponenten - weitere Komponenten des Reduktionsgases.

Die Ammoniakspaltung erfolgt bei einer Temperatur in einem Bereich mit einer Untergrenze von 350°C, bevorzugt 450°C, und einer Obergrenze von 650°C, bevorzugt 550°C, unter ammoniakspaltenden Bedingungen. Zur Erzielung der Ammoniakspaltung werden Katalysatoren eingesetzt, die in diesem Temperaturbereich Ammoniakspaltung katalysieren. Dabei entsteht ein Spaltungsgasstrom, welcher Stickstoff und Wasserstoff - und gegebenenfalls Ammoniak - umfasst. Der Spaltungsgasstrom enthält auch Ammoniak, wenn nicht der gesamte Ammoniak im ersten Gasstrom bei den ammoniakspaltenden Bedingungen umgesetzt wird, sondern nur eine Teilmenge des Ammoniaks im ersten Gasstrom. Der nicht umgesetzte Rest des Ammoniaks aus dem ersten Gasstrom ist dann im Spaltungsgasstrom als Ammoniak vorhanden. Ein Ammoniakgehalt von bis zu 10 Vol%, bevorzugt bis zu 8 Vol%, besonders bevorzugt bis zu 6 Vol% im Spaltungsgasstrom ist akzeptabel.

Grundsätzlich kommt Ammoniak jeglicher "Farbe" in Frage. Unter "Farbe" ist damit die Farbgebung in Zusammenhang mit der zugrundeliegenden Produktionsart zu verstehen. Oftmals ist die Farbe des Ammoniaks mit der Farbe des bei der Produktion eingesetzten Wasserstoffs verbunden. Der Ammoniak kann beispielsweise grün sein, beispielsweise wenn er mittels grünen Wasserstoffs erzeugt wurde; er kann blau sein, beispielsweise, wenn er mittels unter Sequestrierung von entstehendem Kohlendioxid CO₂ gewonnenen Wasserstoffs erzeugt wurde. Der Ammoniak kann auch mittels türkisen Wasserstoffs erzeugt werden, beispielsweise, wenn der Wasserstoff unter Abscheidung von entstehendem Kohlenstoff C erzeugt wird; er kann mittels pinken Wasserstoffs erzeugt werden, beispielsweise, wenn der Wasserstoff unter Verwendung von Atomstrom erzeugt wird. Ebenso in Frage kommt ein Gemisch aus einem oder mehreren dieser "Farben" des Ammoniaks, beziehungsweise ein Gemisch von Farben des dem Ammoniak zugrundeliegenden Wasserstoffs.

Das Reduktionsgas wird unter Nutzung eines kohlenstoffhaltigen Gasstromes erhalten - dabei handelt es sich um den zweiten Gasstrom. Er enthält kohlenstoffhaltiges Gas. Es kann sich bei dem kohlenstoffhaltigen Gas um ein reines Gas, beispielsweise reines Methan, oder ein kohlenstoffhaltiges Gemisch mehrerer Gase handeln, beispielsweise Erdgas oder Koksofengas. Der Kohlenstoff im kohlenstoffhaltigen Gas kann beispielsweise als Kohlenwasserstoff, beispielsweise Methan CH₄, Ethan C₂H₆, Propan C₃H₈, Butan C₄H₁₀, oder beispielsweise als Kohlenmonoxid CO oder beispielsweise als Kohlendioxid CO₂ vorhanden sein.

Ein verwendetes kohlenstoffhaltige Gas kann beispielsweise Erdgas sein, oder aus dem Reduktionsaggregat ausgeleitetes Topgas - gegebenenfalls nach einer Aufbereitung.

Das kohlenstoffhaltige Gas steuert einen Beitrag zum Reduktionsgas bei, dieser Beitrag liegt neben dem von Ammoniak beigesteuerten Beitrag zum Reduktionsgas vor.

Das kohlenstoffhaltige Gas liefert - neben den infolge der Nutzung von Ammoniak beigesteuerten Komponenten - weitere Komponenten des Reduktionsgases. Als solche weitere Komponenten des Reduktionsgases sind auf das metalloxidhaltige Material reduzierend wirkende Komponenten bevorzugt; es kann sich bei ihnen beispielsweise um kohlenwasserstoffhaltige Gase, kohlenstoffhaltige Gase, wasserstoffhaltige Gase, Wasserstoff handeln.

Erfindungsgemäß erfolgt Nutzung von kohlenstoffhaltigem Gas unter Reformierung von kohlenstoffhaltigem Gas. Es wird bei einer Temperatur in einem Bereich mit einer Untergrenze von 700°C, und einer Obergrenze von 1150°C, bevorzugt 1000°C, Reformierungsbedingungen ausgesetzt. Zur Erzielung von Reformierungsbedingungen werden Katalysatoren eingesetzt, die in diesem Temperaturbereich Reformierung katalysieren - genannt Reformierungskatalysatoren. Auch direktreduziertes Eisen DRI kann als Reformierungskatalysator wirken.

Die Reformierung erfolgt beispielsweise als Dampfreformierung und/oder CO2-Reformierung nach

CH₄+H₂O→CO+3H₂

CH₄+CO₂→2CO+2H₂.

Dargestellt ist das am Beispiel Methan CH4, für höhere Kohlenwasserstoffverbindungen verläuft die Reformierung analog.

Bei der Gewinnung des Reduktionsgases werden zumindest eine Teilmenge der Spaltungsgasstrom und zumindest eine Teilmenge der Reformierungsgasstrom kombiniert. Erfindungsgemäß wird der Ammoniakspaltung, bei der der Spaltungsgasstrom entsteht, Wärme zugeführt, die bei der Reformierung anfällt.

Bezüglich des Spaltungsgasstroms liegt Nutzung einer Teilmenge sowohl vor, wenn bei unveränderter Zusammensetzung des Spaltungsgasstroms nur eine Teilmenge des anfallenden Volumens des Spaltungsgasstroms genutzt wird, als auch, wenn nicht alle Bestandteile des anfallenden Spaltungsgasstroms genutzt werden - also beispielsweise, wenn eine Anreicherung oder Abreicherung eines Bestandteiles stattfindet und der entsprechend angereicherte oder abgereicherte Gasstrom vollständig oder teilweise genutzt wird.

Bezüglich des Reformierungsgasstroms liegt Nutzung einer Teilmenge sowohl vor, wenn bei unveränderter Zusammensetzung des Reformierungsgasstroms nur eine Teilmenge des anfallenden Volumens des Reformierungsgasstroms genutzt wird, als auch, wenn nicht alle Bestandteile des anfallenden Reformierungsgasstroms genutzt werden - also beispielsweise, wenn eine Anreicherung oder Abreicherung eines Bestandteiles stattfindet und der entsprechend angereicherte oder abgereicherte Gasstrom vollständig oder teilweise genutzt wird.

Das Reduktionsgas ist das in das Reduktionsaggregat beziehungsweise seinen metalloxidhaltiges Material enthaltenden Innenraum - in dem die Reduktionsreaktionen stattfinden - eingeleitete Gas mit seiner bei der Einleitung vorliegenden Zusammensetzung und Temperatur. Bevor diese Zusammensetzung und Temperatur gegeben sind, liegt ein Vorläufer des Reduktionsgases vor, auf dessen Basis das Reduktionsgas zubereitet wird. Die Zubereitung kann beispielsweise durch Hinzugabe weiterer Komponenten oder Erhitzung erfolgen. Die Zubereitung kann auch durch im Vorläufer ohne äußeres Zutun ablaufende chemische Reaktionen erfolgen, welche beispielsweise die chemische Zusammensetzung beziehungsweise die Temperatur ändern.

Bei dem Reduktionsaggregat handelt es sich beispielsweise um einen Reduktionsschacht - zum Beispiel bei Durchführung eines Direktreduktionsverfahrens mit einem ein Festbett von metalloxidhaltigem Material enthaltenden Reduktionsschacht. Bei dem Reduktionsaggregat handelt es sich beispielsweise um einen Fließbettreaktor - zum Beispiel bei Durchführung eines Direktreduktionsverfahrens mit einem ein Fließbett von metalloxidhaltigem Material enthaltenden Reduktionsaggregat. Der Fließbettreaktor kann dabei auch mehrere einzelne Teilreaktoren umfassen, die beispielweise parallel oder sequenziell geschaltet sind und gemeinsam den Fließbettreaktor bilden.

Bei dem Reduktionsaggregat handelt es sich beispielsweise um einen Wirbelschichtreaktor-zum Beispiel bei Durchführung eines Direktreduktionsverfahrens mit einem eine Wirbelschicht von metalloxidhaltigem Material enthaltenden Reduktionsaggregat. Der Wirbelschichtreaktor kann dabei auch mehrere einzelne Teilreaktoren umfassen, die beispielweise parallel oder sequenziell geschaltet sind und gemeinsam den Wirbelschichtbettreaktor bilden.

Bei dem Reduktionsaggregat kann es sich auch um einen Hochofen handeln, der ein metalloxidhaltiges Material umfassendes Festbett enthält - beim Betrieb eines Hochofens kann Ammoniak beispielsweise PCI-Kohle oder fossile Reduktionsgase ersetzen.

### Vorteilhafte Wirkungen der Erfindung

Bei der Ammoniakspaltung handelt es sich um eine stark endotherme Reaktion (+93 kJ/mol). Ammoniakspaltung führt also zu starken lokalen Temperaturabsenkungen, was weder in einer Reformierungsvorrichtung noch in einem Reduktionsaggregat gewünscht ist.

Reformierungsreaktionen der Dampfreformierung beziehungsweise der CO₂-Reformierung (CH₄+H₂O→CO+3H₂ und CH₄+CO₂→+2CO+2H₂) werden aus kinetischen und thermodynamischen Gründen mit Katalysatoren bei Temperaturen von 700-1150°C durchgeführt. Läge die Temperatur bei Ammoniakspaltung in diesem Bereich, würde das zu einem sehr schnellem Zerfall des Ammoniaks und somit zu schnellem, starken lokalen Temperaturabfall führen. Ein Temperaturabfall kann bei der Reformierung nachteilige Wirkungen wie beispielsweise verminderten Umsatz von Erdgas oder Kohlenstoffablagerungen (CO+H₂→C+H₂O oder 2CO→+C+CO₂) führen.

Zwecks Vermeidung solcher nachteiliger Wechselwirkungen von Ammoniakspaltung und Reformierung erfolgen Ammoniakspaltung und Reformierung an verschiedenen Gasströmen - dem ersten, ammoniakhaltigen Gasstrom, und dem zweiten, kohlenstoffhaltigen Gasstrom; die beiden jeweils dabei entstehenden Gasströme - Spaltungsgasstrom und Reformierungsgasstrom - werden dann vereinigt. Erfindungsgemäß wird ein Beitrag zu der zur Aufrechterhaltung der endothermen Ammoniakspaltung notwendigen Energie von bei der Reformierung anfallender Wärme geliefert. Somit wirken Ammoniakspaltung und Reformierung bei der Gewinnung des Reduktionsgases nicht nur stofflich, sondern auch energetisch zusammen und erlauben eine effiziente Durchführung des Verfahrens. Bei der Reformierung anfallende Wärme ist beispielsweise Abwärme aus der Reformierung. Unter bei der Reformierung anfallender Wärme ist beispielsweise zu verstehen: bei der Reformierung fällt ein heißes Abgas an, beispielsweise infolge Wärme zur Durchführung der Reformierung liefernder, mittels Brennern durchgeführter Verbrennungsprozesse; das heiße Abgas - welches Abwärme aus der Reformierung beinhaltet - kann so genutzt werden, dass seine Wärme - also Abwärme aus der Reformierung - für die Ammoniakspaltung eingesetzt wird.

Wenn eine Vorrichtung zur Ammoniakspaltung in Teilen einer Reformierungsvorrichtung integriert ist, kann Abwärme durch Wärmestrahlung und/oder Konvektion der Ammoniakspaltung zugeführt werden.

Zur Unterstützung der endothermen Ammoniakspaltung kann auch - zusätzlich zu Wärme, die bei der Reformierung anfällt, oder statt solcher Wärme - Abwärme aus dem Reduktionsaggregat, in dem die Reduktion durchgeführt wird, genutzt werden, oder Abwärme aus einem zum Aufschmelzen des Produktes der Reduktion genutzten Schmelzaggregat, oder elektrische Energie, beziehungsweise mittels solcher Wärmequellen erzeugter Dampf genutzt werden. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Wenn beispielsweise das Produkt der Reduktion - beispielsweise DRI direct reduced iron beziehungsweise Eisenschwamm - bei der Stahlherstellung in einem Schmelzaggregat - beispielsweise einem EAF, OBF, Submerged Arc Furnace, Smelter - geschmolzen wird und dabei ein Abgas anfällt, kann der Ammoniakspaltung Wärme zugeführt werden, welche dem Abgas des Schmelzaggregates entzogen wird.

Wenn bei der Reformierung durch Brenner Wärme zugeführt wird, fällt dabei ein Rauchgas an. Rauchgas, oder aus Rauchgas gewonnenes Sealgas - ein Inertgas mit einer Zusammensetzung von beispielsweise etwa 78% N2, 20% CO2, 1% O2, 1% H2O - können einen Beitrag zur Erwärmung auf die zur Ammoniakspaltung NH₃ notwendige Temperatur liefern. Nach einer Ausführungsform wird der Ammoniakspaltung zugeführte Wärme zumindest teilweise vom Rauchgas geliefert.

Die Reformierung wird in einer Reformierungsvorrichtung durchgeführt.

Bei der Reduktion von metalloxidhaltigem Material fällt ein Topgas an, das, zumindest teilweise, bei der Gewinnung des Reduktionsgases genutzt werden kann, gegebenenfalls nach einer Aufbereitung. Die Aufbereitung ist beispielsweise eine Entstaubung, Kühlung, eine Verminderung des Wasserdampfgehaltes und/oder Einstellung des Wasserdampfgehaltes, eine Anreicherung oder eine Abreicherung von Bestandteilen.

Aus dem Reduktionsaggregat wird ein Topgas ausgeleitet. Das Topgas entsteht aus dem Reduktionsgas beim Durchströmen des Reduktionsaggregats aufgrund der im Reduktionsaggregat stattfindenden Reaktionen seiner Komponenten mit dem metalloxidhaltigen Material beziehungsweise den bei diesen Reaktionen entstehenden Produkten, beispielsweise dem entstehenden metallischen Eisen. Das Topgas besitzt infolge der im Reduktionsaggregat stattgefundenen Reduktionsreaktionen weniger Reduktionskraft als das Reduktionsgas. Eine Teilmenge oder das gesamte Topgas kann - gegebenenfalls nach einer Aufbereitung - als Komponente bei der Zubereitung des Reduktionsgases genutzt werden. Nutzung einer Teilmenge liegt sowohl vor, wenn bei unveränderter Zusammensetzung des Topgases nur eine Teilmenge des anfallenden Topgasvolumens genutzt wird, als auch, wenn nicht alle Bestandteile des anfallenden Topgases genutzt werden - also beispielsweise, wenn eine Anreicherung eines Bestandteiles - beispielsweise Anreicherung von Wasserstoff - stattfindet und der entsprechend angereicherte Gasstrom vollständig oder teilweise genutzt wird.

Nach einer bevorzugten Ausführungsform erfolgt die Aufbereitung ohne Verminderung des Kohlendioxidgehalts.

Nach einer bevorzugten Ausführungsform wird bei der Aufbereitung der Stickstoffgehalt vermindert. Dazu kann beispielsweise eine Vorrichtung zur Abtrennung von Stickstoff N₂ genutzt werden.

Wenn nur eine Teilmenge des Topgases für Gewinnung des Reduktionsgases genutzt wird, wird die Menge des Stickstoffs, der ins durch Rezirkulierung Reduktionsgas gelangt, dadurch reduziert, dass entsprechend nicht der gesamte im Topgas enthaltene Stickstoff ins Reduktionsgas gelangt. Topgas, das nicht als Komponente bei der Zubereitung von Topgas genutzt wird, kann beispielsweise als Brennstoffkomponente für Brenner der Reformierungsvorrichtung genutzt werden.

Nach einer bevorzugten Ausführungsform erfolgt bei der Ammoniakspaltung Energiezufuhr zumindest teilweise mittels elektrischer Beheizung. Es kann stattdessen oder zusätzlich auch Abwärme aus dem Reduktionsaggregat genutzt werden, oder Abwärme aus einem zum Aufschmelzen des Produktes der Reduktion genutzten Schmelzaggregat, oder Wärme aus dem Topgas, beziehungsweise mittels solcher Wärmequellen erzeugter Dampf. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer bevorzugten Ausführungsform wird der Ammoniakspaltung Wärme zugeführt, welche dem Topgas entzogen wird.

Nach einer bevorzugten Ausführungsform wird der Ammoniakspaltung Wärme indirekt, beispielsweise über Wärmetauscher oder über ein Wärmeträgermedium - beispielsweise Dampf - zugeführt.

Nach einer bevorzugten Ausführungsform erfolgt bei der Reformierung Energiezufuhr zumindest teilweise mittels elektrischer Beheizung. Es kann stattdessen oder zusätzlich auch Abwärme aus dem Reduktionsaggregat genutzt werden, oder Abwärme aus einem zum Aufschmelzen des Produktes der Reduktion genutzten Schmelzaggregat, oder Abwärme aus der Reformierungsvorrichtung, oder Wärme aus dem Topgas, beziehungsweise mittels solcher Wärmequellen erzeugter Dampf. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer bevorzugten Ausführungsform wird der erste Gasstrom erwärmt, bevor er der Ammoniakspaltung ausgesetzt wird.

Den ersten Gasstrom vor der Ammoniakspaltung zu erwärmen hat den Vorteil, dass für die Ammoniakspaltung günstige Temperaturbedingungen eingestellt werden können. Die bei der Erwärmung zugeführte Energie ist dann bereits im ersten Gasstrom vorhanden. Zur Erwärmung des ersten Gasstroms zugeführte Energie kann beispielsweise per Wärmetausch mit Abgas der Reformierung zugeführt werden.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer bevorzugten Ausführungsform wird der zweite Gasstrom erwärmt, bevor er der Reformierung ausgesetzt wird.

Den zweiten Gasstrom vor der Reformierung zu erwärmen hat den Vorteil, dass für die Reformierung günstige Temperaturbedingungen eingestellt werden können. Die bei der Erwärmung zugeführte Energie ist dann bereits im zweiten Gasstrom vorhanden, und muss nicht bei der Reformierung zugeführt werden. Dadurch kann vermieden werden, dass er zu kalt in die Reformierungsvorrichtung eintritt, und es deshalb zu Kohlenstoffablagerungen kommt.

Zur Erwärmung zugeführte Energie kann beispielsweise per Wärmetausch mit Abgas der Reformierung zugeführt werden.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Abwärme aus der Reformierungsvorrichtung, oder Wärme aus dem Topgas, beziehungsweise mittels solcher Wärmequellen erzeugter Dampf genutzt werden. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer bevorzugten Ausführungsform sind die Mengenverhältnisse von Spaltungsgasstrom und Reformierungsgasstrom bei der Vereinigung veränderbar. Bei der Gewinnung von Reduktionsgas kann auch Zugabe von Wasserstoff H₂ in einen Vorläufer des Reduktionsgases erfolgen. Nach einer anderen bevorzugten Ausführungsform sind die Mengenverhältnisse von Ammoniak und Wasserstoff im Reduktionsgas veränderbar. Beispielsweise kann die Zugabe von Wasserstoff H₂ vergrößert oder vermindert werden, oder die Menge des eingesetzten Ammoniaks kann vergrößert oder vermindert werden.

Bei der Vereinigung von Spaltungsgasstrom und Reformierungsgasstrom entsteht ein Vereinigungsgasstrom, welcher das Reduktionsgas sein kann oder ein Vorläufer des Reduktionsgases.

Nach einer Variante wird bei der Gewinnung des Reduktionsgases dem Vereinigungsgasstrom Ammoniak zugegeben. Dieser Ammoniak kann zusätzlich zu den im Vereinigungsgasstrom vorhandenen reduzierenden Komponenten zur Reduktionskraft des Reduktionsgases beitragen.

Vorzugsweise wird aber die Hauptmenge des zur Gewinnung des Reduktionsgases verwendeten Ammoniaks des Spaltungsgasstroms verwendet, und nur ein kleiner Teil der gesamten Ammoniakmenge dem Vereinigungsgasstrom zugegeben.

Der Vereinigungsgasstrom kann auch Ammoniak enthalten, weil - wie vorab erwähnt - beispielsweise der Spaltungsgasstrom noch Ammoniak enthalten kann.

Dieser Ammoniakgehalt kann durch Zugabe von Ammoniak in den Vereinigungsgasstrom erhöht werden.

Nach einer Variante wird dem Reduktionsaggregat, in dem die Reduktion des metalloxidhaltigen Materials erfolgt, Ammoniak zugegeben - zusätzlich zur Einleitung des Reduktionsgases; nach einer Ausführungsform unabhängig von der Einleitung des Reduktionsgases. Dieser Ammoniak kann zusätzlich zum Reduktionsgas zur Reduktion beitragen.

Vorzugsweise wird aber die Hauptmenge des verwendeten Ammoniaks zur Erzeugung des Spaltungsgasstroms verwendet, und nur ein kleiner Teil der gesamten Ammoniakmenge dem Reduktionsaggregat zugegeben.

Die NH3-Konzentration im Reduktionsgas sollte 10 Vol% nicht übersteigen, bevorzugt 8 Vol% nicht übersteigen, besonders bevorzugt 6 Vol% nicht übersteigen.

Nach einer Variante wird der dem Vereinigungsgasstrom und/oder der dem Reduktionsaggregat zugegebene Ammoniak erwärmt. Dazu kann beispielsweise Abwärme aus der Reformierung genutzt werden. Beispielsweise können dafür Leitungsabschnitte in einem Wärmetauscher genutzt werden, die auch für die Erwärmung von Topgas-Brennstoff per Wärmetausch mit Abwärme aus der Reformierungsvorrichtung genutzt werden können. Topgas-Brennstoff ist eine Teilmenge des Topgases, die - gegebenenfalls nach Aufbereitung - als Komponente des Brennstoffs der in einer Reformierungsvorrichtung betriebenen Brenner genutzt wird.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Vorzugsweise wird an dem Spaltungsgasstrom beziehungsweise an der Teilmenge des Spaltungsgasstroms, der zur Vereinigung mit zumindest einer Teilmenge des Reformierungsgasstroms vorgesehen ist, keine Verminderung des Ammoniakgehaltes - beispielsweise in einem NH3-Absorber oder einem sogenannten NH3-Stripper-vorgenommen - die Zuführung zur Vereinigung erfolgt diesbezüglich direkt.

Ein weiterer Gegenstand der Erfindung ist eine
Vorrichtung zur Reduktion von metalloxidhaltigem Material,
umfassend:
   - ein Reduktionsaggregat,
   - eine in das Reduktionsaggregat mündende Reduktionsgaseinleitung,
   - eine erste Gasstromleitung für ammoniakhaltiges Gas,
   - eine zweite Gasstromleitung für kohlenstoffhaltiges Gas,
   - eine Vorrichtung zur Ammoniakspaltung,
   - eine Reformierungsvorrichtung,
   - eine Spaltungsgasstromleitung,
   - eine Reformierungsgasstromleitung,
   - eine Vereinigungsgasstromleitung,
wobei die erste Gasstromleitung in die Vorrichtung zur Ammoniakspaltung mündet, und die zweite Gasstromleitung in die Reformierungsvorrichtung mündet,
und die Spaltungsgasstromleitung von der Vorrichtung zur Ammoniakspaltung ausgeht,
und die Reformierungsgasstromleitung von der Reformierungsvorrichtung ausgeht,
und die Spaltungsgasstromleitung sowie die Reformierungsgasstromleitung in die Vereinigungsgasstromleitung münden,
dadurch gekennzeichnet, dass
eine Wärmezufuhrvorrichtung
zur Wärmezufuhr von bei Reformierung in der Reformierungsvorrichtung anfallender Wärme
zur Vorrichtung zur Ammoniakspaltung vorhanden ist.

Mittels einer solchen Vorrichtung kann ein erfindungsgemäßes Verfahren durchgeführt werden.

Bestehende Vorrichtungen zur Reduktion von metalloxidhaltigem Material umfassend eine Reformierungsvorrichtung lassen sich einfach auf eine erfindungsgemäße Vorrichtung umrüsten, wodurch sie fähig werden, ein erfindungsgemäßes Verfahren durchzuführen.

Es kann ein Reduktionsaggregat vorhanden sein oder mehrere Reduktionsaggregate.

Es kann eine Reduktionsgaseinleitung vorhanden sein oder mehrere Reduktionsgaseinleitungen.

Es kann eine Vorrichtung zur Ammoniakspaltung vorhanden sein oder mehrere Vorrichtungen zur Ammoniakspaltung.

Es kann eine Reformierungsvorrichtung vorhanden sein oder mehrere Reformierungsvorrichtungen.

Die Reformierungsvorrichtung kann dabei intern sein oder extern sein. Wenn sie intern ist, verarbeitet sie auch Topgas aus dem Reduktionsaggregat; das Topgas ist somit eine bezüglich der Verfahrensführung interne Quelle für kohlenstoffhaltiges Gas. Wenn sie extern ist, verarbeitet sie kein Topgas, sondern nur von externen Quellen zugeführtes kohlenstoffhaltiges Gas.

Ein oder mehrere Gaserhitzer können vorhanden sein, um Vorläufer des Reduktionsgases zu erwärmen.

Es kann eine Spaltungsgasstromleitung vorhanden sein oder mehrere Spaltungsgasstromleitungen.

Es kann eine Reformierungsgasstromleitung vorhanden sein oder mehrere Reformierungsgasstromleitungen.

Es kann eine Vereinigungsgasstromleitung vorhanden sein oder mehrere Vereinigungsgasstromleitungen.

Im Reduktionsaggregat wird metalloxidhaltiges Material mittels eines Reduktionsgases reduziert.

Das Reduktionsgas wird über die Reduktionsgaseinleitung in das Reduktionsaggregat eingeleitet.

Die erste Gasstromleitung führt ammoniakhaltiges Gas. Nach einer Ausführungsform ist in der ersten Gasstromleitung eine Erwärmungsvorrichtung zur Erwärmung des ammoniakhaltigen Gases vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Die erste Gasstromleitung mündet in eine Vorrichtung zur Ammoniakspaltung - der Vorrichtung zur Ammoniakleitung wird also über die erste Gasstromleitung ammoniakhaltiges Gas zugeführt. In der Vorrichtung zur Ammoniakspaltung herrschen bei einer Temperatur in einem Bereich mit einer Untergrenze von 350°C, bevorzugt 450°C, und einer Obergrenze von 650°C, bevorzugt 550°C, ammoniakspaltende Bedingungen. Zumindest eine Teilmenge des Ammoniaks im ammoniakhaltigen Gas wird in der Vorrichtung zur Ammoniakspaltung gespalten, dabei entsteht Spaltungsgas. Von der Vorrichtung zur Ammoniakspaltung geht eine Spaltungsgasstromleitung aus.

Die zweite Gasstromleitung führt kohlenstoffhaltiges Gas. Nach einer Ausführungsform ist in der zweiten Gasstromleitung eine Erwärmungsvorrichtung zur Erwärmung des kohlenstoffhaltigen Gases vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Die zweite Gasstromleitung mündet in eine Reformierungsvorrichtung - der Reformierungsvorrichtung wird also über die zweite Gasstromleitung kohlenstoffhaltiges Gas zugeführt. In der Reformierungsvorrichtung herrschen bei einer Temperatur in einem Bereich mit einer Untergrenze von 700°C und einer Obergrenze von 1150°C, bevorzugt 1000°C, Reformierungsbedingungen. Zumindest eine Teilmenge des kohlenstoffhaltigen Gases wird in der Reformierungsvorrichtung reformiert. In der Reformierungsvorrichtung wird Reformierungsgas gewonnen. Von der Reformierungsvorrichtung geht eine Reformierungsgasstromleitung aus.

Nach einer Ausführungsform ist in der Spaltungsgasstromleitung eine Erwärmungsvorrichtung zur Erwärmung des Spaltungsgasstroms vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer Ausführungsform ist in der Reformierungsgasstromleitung eine Erwärmungsvorrichtung zur Erwärmung des Reformierungsgasstroms vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Die Spaltungsgasstromleitung und die Reformierungsgasstromleitung münden in eine Vereinigungsgasstromleitung. Die Vereinigungsgasstromleitung dient zur Leitung eines Gemischs aus Spaltungsgasstrom und Reformierungsgasstrom. Die Vereinigungsgasstromleitung kann einen Gasmischerbereich umfassen; nach einer Variante münden die Spaltungsgasstromleitung und die Reformierungsgasstromleitung in den Gasmischerbereich, wo Spaltungsgasstrom und Reformierungsgasstrom sich vereinigen und mittels eines Gasmischers gemischt werden, und dabei erhaltenes Gemisch wird in der Vereinigungsgasstromleitung weitergeleitet.

Nach einer Ausführungsform ist in der Vereinigungsgasstromleitung eine Erwärmungsvorrichtung zur Erwärmung des Vereinigungsgasstroms vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer Ausführungsform ist in der Spaltungsgasstromleitung keine Vorrichtung zur Verminderung des Ammoniakgehaltes vorhanden.

Nach einer Ausführungsform ist in Gasstromrichtung in Richtung Reduktionsaggregat nach der Vorrichtung zur Ammoniakspaltung keine Vorrichtung zur Verminderung des Ammoniakgehaltes vorhanden.

Die erfindungsgemäße Vorrichtung ist dadurch gekennzeichnet, dass
eine Wärmezufuhrvorrichtung
zur Wärmezufuhr von bei Reformierung in der Reformierungsvorrichtung anfallender Wärme
zur Vorrichtung zur Ammoniakspaltung
vorhanden ist.

Nach einer Ausführungsform umfasst die Vorrichtung zur Ammoniakspaltung
als Wärmezufuhrvorrichtung zur Wärmezufuhr von bei Reformierung in der Reformierungsvorrichtung anfallender Wärme zur Vorrichtung zur Ammoniakspaltung einen Wärmetauscher zum Wärmetausch mit Rauchgas aus der
Reformierungsvorrichtung. Wenn in der Reformierungsvorrichtung Brenner zur Wärmezufuhr genutzt werden, fällt ein Rauchgas an. Das Rauchgas kann über eine Rauchgasausleitung aus der Reformierungsvorrichtung ausgeleitet werden. Wärme aus dem Rauchgas kann durch Führung der Rauchgasausleitung durch einen Wärmetauscher der Vorrichtung zur Ammoniakspaltung bei der Spaltung des Ammoniaks genutzt werden. Nach einer Ausführungsform kann heißes Rauchgas durch die Vorrichtung zur Ammoniakspaltung geführt werden; wenn beispielsweise in der Vorrichtung zur Ammoniakspaltung mit Katalysator gefüllte Rohre von Gemisch durchströmt werden, kann Rauchgas um diese Rohre herumgeführt werden, um Wärme zu übertragen.

Auch nutzbar zur Wärmezufuhr zur Vorrichtung zur Ammoniakspaltung sind Abwärme aus dem Reduktionsaggregat, oder Abwärme aus einem zum Aufschmelzen des Produktes der Reduktion genutzten Schmelzaggregat, oder Wärme aus dem Topgas.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer Ausführungsform umfasst die Vorrichtung zur Ammoniakspaltung eine elektrische Beheizungsvorrichtung. Eine elektrische Beheizungsvorrichtung beheizt mittels elektrischer Energie.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer Ausführungsform ist die Vorrichtung zur Ammoniakspaltung als Ammoniakspalter ausgeführt; ein Ammoniakspalter ist ein von einer Reformierungsvorrichtung separates Gerät.

Nach einer Ausführungsform ist die Vorrichtung zur Ammoniakspaltung ausgeführt integriert in Teilen der Reformierungsvorrichtung.

Eine Reformierungsvorrichtung ist beispielsweise ein in einer Umhausung mehrere Katalysatormaterial für Reformierung enthaltende Rohre umfassender Reformer. Die Vorrichtung zur Ammoniakspaltung kann dann beispielweise in Teilen der Reformierungsvorrichtung beziehungsweise des Reformers integriert sein, indem Katalysatormaterial für Ammoniakspaltung enthaltende Rohre - die eine Vorrichtung zur Ammoniakspaltung sind - auch innerhalb der Umhausung des Reformers angeordnet sind. Wenn Brenner zur Zufuhr von Wärme zur Reformierung genutzt werden, fällt ein Rauchgas aus den Verbrennungsvorgängen an. Dieses Abgas der Reformierung kann die Katalysatormaterial für Ammoniakspaltung enthaltenden Rohre der Vorrichtung zur Ammoniakspaltung, welche in der Umhausung angeordnet sind, umströmen - und der Vorrichtung zur Ammoniakspaltung dabei Wärme zuführen.

Nach einer Ausführungsform umfasst die Reformierungsvorrichtung eine elektrische Beheizungsvorrichtung. Eine elektrische Beheizungsvorrichtung beheizt mittels elektrischer Energie.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Nach einer Ausführungsform umfasst die Vorrichtung zur Reduktion von metalloxidhaltigem Material eine Topgasausleitung zur Ausleitung von Topgas aus dem Reduktionsaggregat.

Nach einer bevorzugten Ausführungsform mündet die Topgasausleitung in die zweite Gasstromleitung für kohlenstoffhaltiges Gas.

Nach einer Ausführungsform enthält die Topgasausleitung zumindest eine Aufbereitungsvorrichtung. Mittels einer Aufbereitungsvorrichtung wird durchgeführt beispielsweise Entstaubung, Kühlung, eine Verminderung des Wasserdampfgehaltes und/oder Einstellung des Wasserdampfgehaltes, Anreicherung oder Abreicherung von Bestandteilen.

Vorzugsweise enthält die Topgasausleitung keine Vorrichtung zur Verminderung des Kohlendioxidgehalts.

Vorzugsweise enthält die Topgasausleitung zumindest eine Vorrichtung zur Abtrennung von Stickstoff N₂.

Vorzugsweise geht von der Topgasausleitung zumindest eine Brennstoffleitung zur Lieferung von Topgas als Brennstoffkomponente für Brenner der Reformierungsvorrichtung aus.

Nach einer bevorzugten Ausführungsform umfasst die Vorrichtung zur Reduktion von metalloxidhaltigem Material eine Vorrichtung zur Steuerung und/oder Regelung der Mengenverhältnisse von Ammoniak und Wasserstoff im Reduktionsgas. Eine derartige Vorrichtung umfasst Sensoren zur Ermittlung des Gehalts von Ammoniak und Wasserstoff im Reduktionsgas.

Nach einer bevorzugten Ausführungsform umfasst die Vorrichtung zur Reduktion von metalloxidhaltigem Material zumindest eine Wasserstoffzugabeleitung zur Zugabe von Wasserstoff H₂ in die Vereinigungsgasstromleitung. Die Wasserstoffzugabeleitung mündet in die Vereinigungsgasstromleitung.

Nach einer bevorzugten Ausführungsform umfasst die Vorrichtung zur Reduktion von metalloxidhaltigem Material zumindest eine Ammoniakzugabeleitung zur Zugabe von Ammoniak in die Vereinigungsgasstromleitung. Die Ammoniakzugabeleitung mündet in die Vereinigungsgasstromleitung.

Nach einer bevorzugten Ausführungsform umfasst die Vorrichtung zur Reduktion von metalloxidhaltigem Material zumindest eine Ammoniakzufuhrleitung zur Zugabe von Ammoniak in das Reduktionsaggregat - zusätzlich zur Einleitung des Reduktionsgases beziehungsweise zusätzlich zur Reduktionsgaseinleitung; diese Zugabe von Ammoniak in das Reduktionsaggregat kann unabhängig von der Einleitung des Reduktionsgases erfolgen. Die Ammoniakzufuhrleitung mündet in das Reduktionsaggregat.

Nach einer Variante ist in der Ammoniakzufuhrleitung eine Erwärmungsvorrichtung zur Erwärmung des Ammoniaks vorhanden; beispielsweise ein Wärmetauscher, beispielsweise zum Wärmetausch mit Abgas der Reformierung. Dabei können zur Nutzung der Abwärme aus der Reformierung beispielsweise Leitungsabschnitte in einem Wärmetauscher genutzt werden, die auch für die Erwärmung von Topgas-Brennstoff per Wärmetausch mit Abwärme aus dem Reformer genutzt werden können.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Wenn Vorläufer des Reduktionsgases mittels Gaserhitzern erwärmt werden, kann auch Abwärme aus den Gaserhitzern genutzt werden, beziehungsweise mittels solcher Wärmequelle erzeugter Dampf.

Ein weiterer Gegenstand der vorliegenden Anmeldung ist eine

Signalverarbeitungseinrichtung mit einem maschinenlesbaren Programmcode, dadurch gekennzeichnet, dass er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines Verfahrens nach einem der Ansprüche 1 bis 8.

Ein weiterer Gegenstand der vorliegenden Anmeldung ist ein maschinenlesbarer Programmcode für eine Signalverarbeitungseinrichtung, dadurch gekennzeichnet, dass der Programmcode Steuer und/oder Regelbefehle aufweist, welche die Signalverarbeitungseinrichtung zur Durchführung eines erfindungsgemäßen Verfahrens veranlassen. Bei einem weiteren Gegenstand handelt es sich um ein Computerprogrammprodukt umfassend Befehle für eine Signalverarbeitungseinrichtung, die bei der Ausführung des Programms für die Signalverarbeitungsvorrichtung diese veranlassen, das Verfahren nach einem der Ansprüche 1 bis 8 durchzuführen.

Ein weiterer Gegenstand der vorliegenden Anmeldung ist ein Speichermedium mit einem darauf gespeicherten erfindungsgemäßen maschinenlesbaren Programmcode. Bei einem weiteren Gegenstand handelt es sich um ein Speichermedium mit einem darauf gespeicherten Computerprogramm zur Durchführung eines Verfahrens nach einem der Ansprüche 1 bis 8.

### Kurze Beschreibung der Zeichnungen

Nachfolgend wird die vorliegende Erfindung anhand mehrerer schematischer Figuren beispielhaft beschrieben.
Figur 1 zeigt schematisch die Durchführung einer Variante des erfindungsgemäßen Verfahrens in einer Variante der erfindungsgemäßen Vorrichtung zur Reduktion von metalloxidhaltigem Material.
Figuren 2 zeigt schematisch eine weitere Variante.
Figuren 3 zeigt eine weitere Variante.
Figur 4 zeigt schematisch eine weitere Variante.

### Beschreibung der Ausführungsformen

### Beispiele

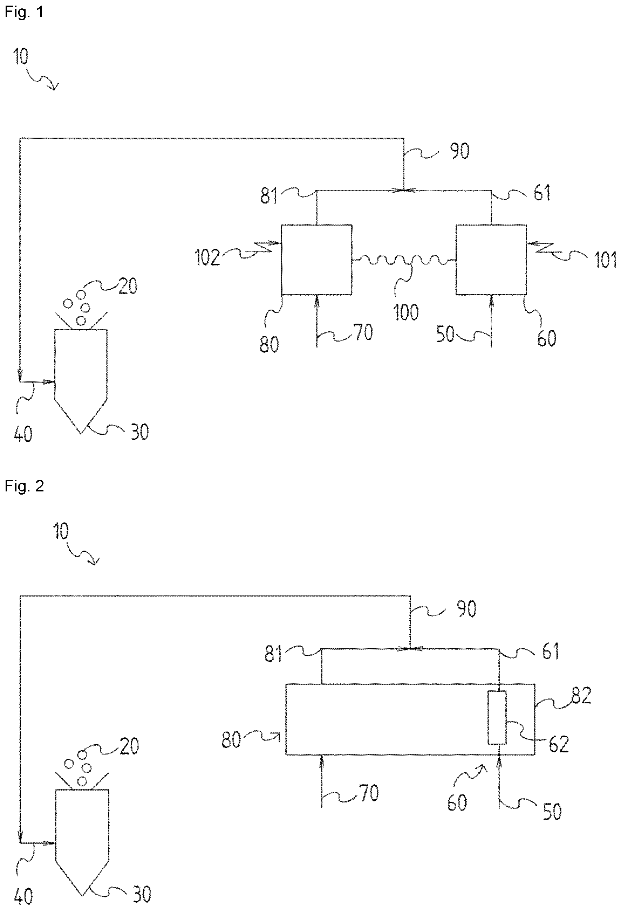

Figur 1 zeigt schematisch eine Vorrichtung zur Reduktion 10 von metalloxidhaltigem Material 20. Metalloxidhaltiges Material 20 wird in das Reduktionsaggregat 30 eingegeben. Reduktionsgas wird über die in das Reduktionsaggregat 30 mündende Reduktionsgaseinleitung 40 eingeleitet, um das metalloxidhaltige Material 20 zu reduzieren. Das Reduktionsgas wird unter Nutzung von Ammoniak NH₃ und unter Nutzung von kohlenstoffhaltigem Gas gewonnen.

Dazu wird ein erster Gasstrom, der ammoniakhaltig ist, Ammoniakspaltung ausgesetzt, wobei ein Spaltungsgasstrom entsteht. Dafür wird ein ammoniakhaltiger erster Gasstrom über eine erste Gasstromleitung 50 einer Vorrichtung zur Ammoniakspaltung 60 zugeleitet - in dieser wird zumindest ein Teil des Ammoniaks im ammoniakhaltigen Gasstrom gespalten. Ein zweiter Gasstrom, der kohlenstoffhaltig ist, wird Reformierung ausgesetzt, wobei ein Reformierungsgasstrom entsteht. Dafür wird kohlenstoffhaltiger zweiter Gasstrom über eine zweite Gasstromleitung 70 einer Reformierungsvorrichtung 80 zugeleitet - in dieser wird reformiert.

In der Vorrichtung zur Ammoniakspaltung 60 herrschen bei einer Temperatur in einem Bereich mit einer Untergrenze von 350°C, bevorzugt 450°C, und einer Obergrenze von 650°C, bevorzugt 550°C, ammoniakspaltende Bedingungen. Zumindest eine Teilmenge des Ammoniaks im ammoniakhaltigen Gas wird in der Vorrichtung zur Ammoniakspaltung 60 gespalten, dabei entsteht Spaltungsgas. Von der Vorrichtung zur Ammoniakspaltung 60 geht eine Spaltungsgasstromleitung 61 aus.

In der Reformierungsvorrichtung 80 herrschen bei einer Temperatur in einem Bereich mit einer Untergrenze von 700°C und einer Obergrenze von 1150°C, bevorzugt 1000°C, Reformierungsbedingungen. Zumindest eine Teilmenge des kohlenstoffhaltigen Gases wird in der Reformierungsvorrichtung 80 reformiert. In der Reformierungsvorrichtung 80 wird Reformierungsgas gewonnen. Von der Reformierungsvorrichtung 80 geht eine Reformierungsgasstromleitung 81 aus.

Die Spaltungsgasstromleitung 61 und die Reformierungsgasstromleitung 81 münden in eine Vereinigungsgasstromleitung 90, somit ist Vereinigung zumindest einer Teilmenge des Spaltungsgasstroms und zumindest einer Teilmenge des Reformierungsgasstroms möglich und kann bei der Gewinnung des Reduktionsgases erfolgen. Die Vereinigungsgasstromleitung 90 kann einen Gasmischerbereich umfassen; was zur besseren Übersichtlichkeit aber nicht extra dargestellt ist. Die Vereinigungsgasstromleitung 81 mündet in die Reduktionsgaseinleitung 40.

Der Ammoniakspaltung wird Wärme zugeführt, die bei der Reformierung anfällt. Dazu ist eine Wärmezufuhrvorrichtung 100 - dargestellt als gewellte Linie zwischen der Reformierungsvorrichtung 80 und der Vorrichtung zur Ammoniakspaltung 60 - zur Wärmezufuhr von bei Reformierung in der Reformierungsvorrichtung 80 anfallender Wärme zur Vorrichtung zur Ammoniakspaltung 60 vorhanden. Es kann sich bei der Wärmezufuhrvorrichtung 100 um einen Wärmetauscher zum Wärmetausch mit Rauchgas aus der Reformierungsvorrichtung handeln.

In der ersten Gasstromleitung für ammoniakhaltiges Gas 60 kann eine Erwärmungsvorrichtung zur Erwärmung des Ammoniaks vorhanden sein, was zur besseren Übersichtlichkeit aber nicht extra dargestellt ist.

In der zweite Gasstromleitung für kohlenstoffhaltiges Gas 50 kann eine Erwärmungsvorrichtung zur Erwärmung des kohlenstoffhaltigen Gases vorhanden sein, was zur besseren Übersichtlichkeit aber nicht extra dargestellt ist.

Die Vorrichtung zur Ammoniakspaltung 60 kann optional eine elektrische Beheizungsvorrichtung 101 umfassen; die optional vorhandene elektrische Beheizungsvorrichtung 101 ist schematisch dargestellt durch einen Blitz. Auch optional kann eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf, oder Abwärme aus Gaserhitzern nutzt, was zur besseren Übersichtlichkeit aber nicht extra dargestellt ist.

Die Vorrichtung zur Ammoniakspaltung 60 kann optional eine elektrische Beheizungsvorrichtung 101 umfassen; die optional vorhandene elektrische Beheizungsvorrichtung 101 ist schematisch dargestellt durch einen Blitz. Auch optional kann eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf, oder Abwärme aus Gaserhitzern nutzt, was zur besseren Übersichtlichkeit aber nicht extra dargestellt ist.

Die Reformierungsvorrichtung 80 kann optional eine elektrische Beheizungsvorrichtung 102 umfassen. Eine elektrische Beheizungsvorrichtung beheizt mittels elektrischer Energie.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf, oder Abwärme aus Gaserhitzern nutzt, was zur besseren Übersichtlichkeit aber nicht extra dargestellt ist.

Die Spaltungsgasstromleitung 61 kann optional eine Erwärmungsvorrichtung zur Erwärmung des Spaltungsgasstroms enthalten, was zur besseren Übersichtlichkeit aber nicht extra dargestellt ist.

Die Reformierungsgasstromleitung 81 kann optional eine Erwärmungsvorrichtung zur Erwärmung des Spaltungsgasstroms enthalten, was zur besseren Übersichtlichkeit aber nicht extra dargestellt ist.

In der Vereinigungsgasstromleitung 90 kann optional eine Erwärmungsvorrichtung zur Erwärmung des Vereinigungsgasstroms vorhanden sein, was zur besseren Übersichtlichkeit aber nicht extra dargestellt ist.

In der Vereinigungsgasstromleitung 90 ist keine Vorrichtung zur Verminderung des Ammoniakgehaltes vorhanden.

In der Vorrichtung zur Reduktion 10 von metalloxidhaltigem Material 20 ist in Gasstromrichtung in Richtung Reduktionsaggregat 30 nach der Vorrichtung zur Ammoniakspaltung 60 keine Vorrichtung zur Verminderung des Ammoniakgehaltes vorhanden.

In Figur 1 ist die Vorrichtung zur Ammoniakspaltung 60 als ein von der Reformierungsvorrichtung 80 separates Gerät Ammoniakspalter ausgeführt.

Figur 2 zeigt eine mit Figur 1 weitgehend identische Ausführung, die sich in der Ausführung der Vorrichtung zur Ammoniakspaltung 60 unterscheidet. Schematisch dargestellt ist eine Ausführung der Vorrichtung zur Ammoniakspaltung 60 als integriert in Teilen der Reformierungsvorrichtung 80. Die Vorrichtung zur Ammoniakspaltung 60 umfasst Katalysatormaterial für Ammoniakspaltung enthaltende Rohre, ein Rohr 62 ist dargestellt.

Die Vorrichtung zur Ammoniakspaltung 60 ist integriert in Teilen der Reformierungsvorrichtung 80 ausgeführt.

Die Reformierungsvorrichtung 80 ist ein in einer Umhausung 82 mehrere Katalysatormaterial für Reformierung enthaltende Rohre - nicht dargestellt - umfassender Reformer. Die Vorrichtung zur Ammoniakspaltung 60 ist in Teilen der Reformierungsvorrichtung 80 integriert, indem Katalysatormaterial für Ammoniakspaltung enthaltende Rohre 62 auch innerhalb der Umhausung 82 angeordnet sind. Wenn Brenner zur Zufuhr von Wärme zur Reformierung genutzt werden, fällt ein Rauchgas aus den Verbrennungsvorgängen an. Dieses Abgas der Reformierung kann die Katalysatormaterial für Ammoniakspaltung enthaltenden Rohre 62 der Vorrichtung zur Ammoniakspaltung 60, welche in der Umhausung 82 angeordnet sind, umströmen - und der Vorrichtung zur Ammoniakspaltung 60 dabei Wärme zuführen.

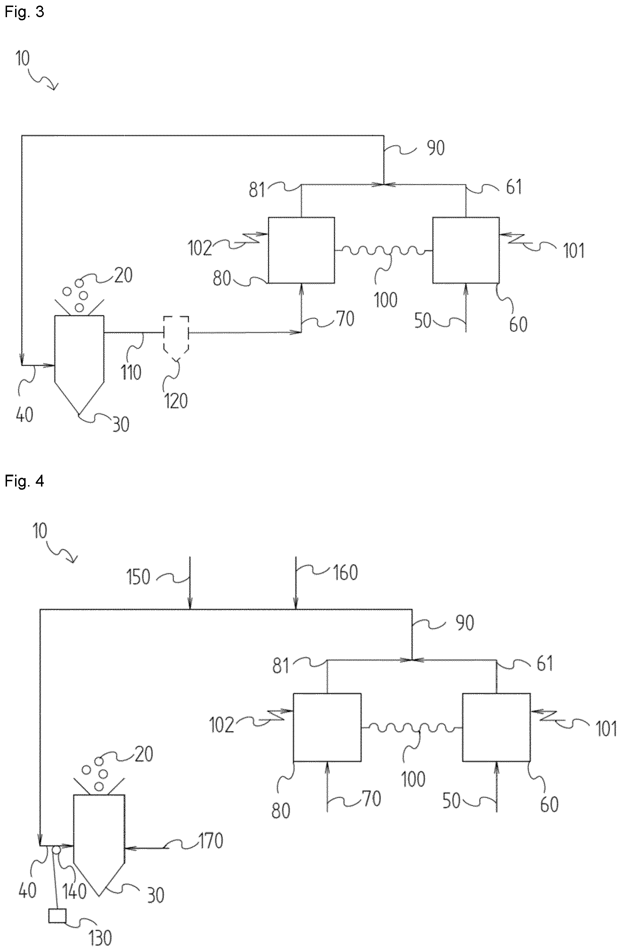

Figur 3 zeigt eine mit Figur 1 weitgehend identische Ausführung, zusätzlich ist eine Variante gezeigt, bei der eine Topgasausleitung 110 zur Ausleitung von Topgas aus dem Reduktionsaggregat 30 vorhanden ist. Die Topgasausleitung 110 mündet in die zweite Gasstromleitung für kohlenstoffhaltiges Gas 70. Dargestellt ist auch eine optional - und daher strichliert gezeichnet - vorhandene Aufbereitungsvorrichtung 120, im dargestellten Fall eine Entstaubungsvorrichtung. Die Topgasausleitung 110 enthält keine Vorrichtung zur Verminderung des Kohlendioxidgehalts.

Die Topgasausleitung 110 kann eine Vorrichtung zur Abtrennung von Stickstoff N₂ enthalten, was zur besseren Übersichtlichkeit aber nicht extra dargestellt ist.

Von der Topgasausleitung kann eine Brennstoffleitung zur Lieferung von Topgas als Brennstoffkomponente für Brenner der Reformierungsvorrichtung 80 ausgehen, was zur besseren Übersichtlichkeit aber nicht extra dargestellt ist.

Figur 4 zeigt eine mit Figur 1 weitgehend identische Ausführung.

Auf die zusätzlich dargestellten Merkmale wird nun eingegangen:
- die Vorrichtung zur Reduktion 10 von metalloxidhaltigem Material 20 umfasst auch eine Vorrichtung zur Steuerung und/oder Regelung 130 der Mengenverhältnisse von Ammoniak und Wasserstoff im Reduktionsgas. Dargestellt ist auch ihr Sensor 140 zur Ermittlung des Gehalts von Ammoniak und Wasserstoff im Reduktionsgas.
- die Vorrichtung zur Reduktion 10 von metalloxidhaltigem Material 20 umfasst auch eine Wasserstoffzugabeleitung 150 zur Zugabe von Wasserstoff H₂ in die Vereinigungsgasstromleitung 90. Die Wasserstoffzugabeleitung 150 mündet in die Vereinigungsgasstromleitung 90.
- die Vorrichtung zur Reduktion 10 von metalloxidhaltigem Material 20 umfasst auch eine Ammoniakzugabeleitung 160 zur Zugabe von Ammoniak in die

Vereinigungsgasstromleitung 90. Die Ammoniakzugabeleitung 160 mündet in die Vereinigungsgasstromleitung 90.
- die Vorrichtung zur Reduktion 10 von metalloxidhaltigem Material 20 umfasst auch eine Ammoniakzufuhrleitung 170 zur Zugabe von Ammoniak in das Reduktionsaggregat 30.

Die Ammoniakzufuhrleitung 170 mündet in das Reduktionsaggregat 30 und ist unabhängig von der Einleitung des Reduktionsgases in das Reduktionsaggregat 30.

In der Ammoniakzufuhrleitung 170 kann eine Erwärmungsvorrichtung zur Erwärmung des Ammoniaks vorhanden sein; beispielsweise ein Wärmetauscher, beispielsweise zum Wärmetausch mit Abgas der Reformierung. Dabei können zur Nutzung der Abwärme aus der Reformierung beispielsweise Leitungsabschnitte in einem Wärmetauscher genutzt werden, die auch für die Erwärmung von Topgas-Brennstoff per Wärmetausch mit Abwärme aus dem Reformer genutzt werden können.

Auch nutzbar sind Abwärme aus dem Reduktionsaggregat, oder Abwärme aus einem zum Aufschmelzen des Produktes der Reduktion genutzten Schmelzaggregat, oder Wärme aus dem Topgas oder Abwärme aus Gaserhitzern, beziehungsweise mittels solcher Wärmequellen erzeugten Dampf. Das ist zur besseren Übersichtlichkeit aber nicht extra dargestellt.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, oder Abwärme aus Gaserhitzern, beziehungsweise mittels solcher Wärmequellen erzeugten Dampf nutzt. Das ist zur besseren Übersichtlichkeit aber nicht extra dargestellt.

### Liste der Bezugszeichen

- 10: Vorrichtung zur Reduktion
- 20: metalloxidhaltiges Material
- 30: Reduktionsaggregat
- 40: Reduktionsgaseinleitung
- 50: erste Gasstromleitung (für ammoniakhaltiges Gas)
- 60: Vorrichtung zur Ammoniakspaltung
- 61: Spaltungsgasstromleitung
- 62: Rohr (enthaltend Katalysatormaterial für Ammoniakspaltung)
- 70: zweite Gasstromleitung (für kohlenstoffhaltiges Gas)
- 80: Reformierungsvorrichtung
- 81: Reformierungsgasstromleitung
- 82: Umhausung
- 90: Vereinigungsgasstromleitung
- 100: Wärmezufuhrvorrichtung
- 101: elektrische Beheizungsvorrichtung
- 102: elektrische Beheizungsvorrichtung
- 110: Topgasausleitun
- 120: Aufbereitungsvorrichtung
- 130: Vorrichtung zur Steuerung und/oder Regelung der Mengenverhältnisse (von Ammoniak und Wasserstoff im Reduktionsgas)
- 140: Sensor
- 150: Wasserstoffzugabeleitung
- 160: Ammoniakzugabeleitung
- 170: Ammoniakzufuhrleitung

## Patentansprüche

1. Verfahren zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird,
wobei
bei der Gewinnung des Reduktionsgases
ein erster Gasstrom, der ammoniakhaltig ist, Ammoniakspaltung ausgesetzt wird und dabei ein Spaltungsgasstrom entsteht,
und
ein zweiter Gasstrom, der kohlenstoffhaltig ist, Reformierung ausgesetzt wird und dabei ein Reformierungsgasstrom entsteht,
und Vereinigung zumindest einer Teilmenge des Spaltungsgasstroms und zumindest einer Teilmenge des Reformierungsgasstroms erfolgt,
**dadurch gekennzeichnet, dass**
der Ammoniakspaltung Wärme zugeführt, die bei der Reformierung anfällt.

2. Verfahren nach Anspruch 1, wobei bei der Reformierung Rauchgas anfällt, **dadurch gekennzeichnet, dass** der Ammoniakspaltung zugeführte Wärme zumindest teilweise vom Rauchgas geliefert wird.

3. Verfahren nach einem der Ansprüche 1 bis 2, wobei eine Teilmenge des Topgases oder das gesamte Topgas nach einer Aufbereitung als Komponente bei der Zubereitung des Reduktionsgases genutzt wird, **dadurch gekennzeichnet, dass** die Aufbereitung ohne Verminderung des Kohlendioxidgehalts erfolgt

4. Verfahren nach einem der Ansprüche 1 bis 3, wobei eine Teilmenge des Topgases oder das gesamte Topgas nach einer Aufbereitung als Komponente bei der Zubereitung des Reduktionsgases genutzt wird, **dadurch gekennzeichnet, dass** bei der Aufbereitung der Stickstoffgehalt vermindert wird.

5. Verfahren nach einem der Ansprüche 1 bis 4, **dadurch gekennzeichnet, dass** bei der Gewinnung des Reduktionsgases dem Vereinigungsgasstrom Ammoniak zugegeben wird.

6. Verfahren nach einem der Ansprüche 1 bis 5, wobei die Reduktion des metalloxidhaltigen Materials in einem Reduktionsaggregat (30) durchgeführt wird, **dadurch gekennzeichnet, dass** dem Reduktionsaggregat (30) zusätzlich zur Einleitung von Reduktionsgas Ammoniak zugegeben wird.

7. Verfahren nach einem der Ansprüche 1 bis 6, **dadurch gekennzeichnet, dass** die NH₃-Konzentration im Reduktionsgas 10 Vol% nicht übersteigt, bevorzugt 8 Vol% nicht übersteigt, besonders bevorzugt 6 Vol% nicht übersteigt.

8. Verfahren nach einem der Ansprüche 1 bis 7, **dadurch gekennzeichnet, dass** an dem Spaltungsgasstrom beziehungsweise an der Teilmenge des Spaltungsgasstroms, der zur Vereinigung mit zumindest einer Teilmenge des Reformierungsgasstroms vorgesehen ist, keine Verminderung des Ammoniakgehaltes vorgenommen wird.

9. Vorrichtung zur Reduktion (10) von metalloxidhaltigem Material,
umfassend:
- ein Reduktionsaggregat (30),
- eine in das Reduktionsaggregat (30) mündende Reduktionsgaseinleitung (40),
- eine erste Gasstromleitung (50) für ammoniakhaltiges Gas,
- eine zweite Gasstromleitung (70) für kohlenstoffhaltiges Gas,
- eine Vorrichtung zur Ammoniakspaltung (60),
- eine Reformierungsvorrichtung (80),
- eine Spaltungsgasstromleitung (61),
- eine Reformierungsgasstromleitung (81),
- eine Vereinigungsgasstromleitung (90),
wobei die erste Gasstromleitung (50) in die Vorrichtung zur Ammoniakspaltung (60) mündet,
und die zweite Gasstromleitung (70) in die Reformierungsvorrichtung (80) mündet,
und die Spaltungsgasstromleitung (61) von der Vorrichtung zur Ammoniakspaltung (60) ausgeht,
und die Reformierungsgasstromleitung (81) von der Reformierungsvorrichtung (80) ausgeht,
und die Spaltungsgasstromleitung (61) sowie die Reformierungsgasstromleitung (81) in die Vereinigungsgasstromleitung (90) münden,
**dadurch gekennzeichnet, dass**
eine Wärmezufuhrvorrichtung (100)
zur Wärmezufuhr von bei Reformierung in der Reformierungsvorrichtung (80) anfallender Wärme
zur Vorrichtung zur Ammoniakspaltung (60)
vorhanden ist.

10. Vorrichtung nach Anspruch 9, **dadurch gekennzeichnet, dass** in der Spaltungsgasstromleitung (61) keine Vorrichtung zur Verminderung des Ammoniakgehaltes vorhanden ist.

11. Vorrichtung nach Anspruch 9 oder 10, **dadurch gekennzeichnet, dass** in Gasstromrichtung in Richtung Reduktionsaggregat (30) nach der Vorrichtung zur Ammoniakspaltung (60) keine Vorrichtung zur Verminderung des Ammoniakgehaltes vorhanden ist.

12. Vorrichtung nach einem der Ansprüche 9 bis 11 mit einer Topgasausleitung (110) zur Ausleitung von Topgas aus dem Reduktionsaggregat (30), **dadurch gekennzeichnet, dass** die Topgasausleitung (110) keine Vorrichtung zur Verminderung des Kohlendioxidgehalts enthält.

13. Vorrichtung nach einem der Ansprüche 9 bis 12 mit einer Topgasausleitung (110) zur Ausleitung von Topgas aus dem Reduktionsaggregat (30), **dadurch gekennzeichnet, dass** die Topgasausleitung (110) zumindest eine Vorrichtung zur Abtrennung von Stickstoff N2 enthält.

14. Vorrichtung nach einem der Ansprüche 9 bis 13, **dadurch gekennzeichnet, dass** sie zumindest eine Ammoniakzugabeleitung (160) zur Zugabe von Ammoniak in die Vereinigungsgasstromleitung (90) umfasst.

15. Vorrichtung nach einem der Ansprüche 9 bis 14, **dadurch gekennzeichnet, dass** sie zumindest eine Ammoniakzufuhrleitung (170) zur Zugabe von Ammoniak in das Reduktionsaggregat (30) umfasst.
